Europäisches Patentamt

European Patent Office

Office européen des brevets

(19)

(11) **EP 1 191 676 B1**

(12) **EUROPÄISCHE PATENTSCHRIFT**

(45) Veröffentlichungstag und Bekanntmachung des Hinweises auf die Patenterteilung:
**19.01.2005 Patentblatt 2005/03**

(51) Int Cl.[7]: **H02P 5/418**, H02P 7/622, H02K 17/08, H02P 5/402

(21) Anmeldenummer: **01116642.8**

(22) Anmeldetag: **13.07.2001**

(54) **Verfahren zum Ermitteln der Drehzahl eines Wechselstrom-Motors sowie Motor-Steuersystem**

Process for determining the speed of an ac motor and motor control system

Procédé de détection de la vitesse de rotation d'un moteur à courant alternatif et système de commande de moteur

(84) Benannte Vertragsstaaten:
**AT BE CH CY DE DK ES FI FR GB GR IE IT LI LU MC NL PT SE TR**

(30) Priorität: **26.09.2000 DE 10047508**

(43) Veröffentlichungstag der Anmeldung:
**27.03.2002 Patentblatt 2002/13**

(73) Patentinhaber: **ebm-papst Mulfingen GmbH & Co.KG**
**74673 Mulfingen (DE)**

(72) Erfinder:
- **Lelkes, András, Dr.-Ing.**
  **74653 Künzelsau (DE)**
- **Krotsch, Jens, Dipl.-Ing.(FH)**
  **97996 Niederstetten (DE)**

(74) Vertreter: **Zapf, Christoph, Dipl.-Ing. et al Patentanwälte Dr. Solf und Zapf, Candidplatz 15 81543 München (DE)**

(56) Entgegenhaltungen:
**EP-A- 0 741 450          DE-A- 4 130 532**

**Beschreibung**

Die vorliegende Erfindung betrifft zunächst ein Verfahren zum Ermitteln der jeweiligen Ist-Drehzahl eines phasenanschnittgesteuerten Wechselstrom-Motors, insbesondere Kondensatormotors, wobei der Motor zur Änderung seiner Drehzahl jeweils periodisch über einen bestimmten Phasenanschnittwinkel hinweg von einer Versorgungsspannung abschaltbar ist.

Ferner betrifft die Erfindung auch ein Steuersystem für einen Wechselstrom-Motor, insbesondere für einen Kondensatormotor mit einer Arbeitswicklung und einer in Reihe mit einem Betriebskondensator liegenden Hilfswicklung, wobei über mindestens einen von einer Steuereinheit steuerbaren statischen Schalter der Motor zur Änderung seiner Drehzahl periodisch über einen bestimmten Phasenanschnittwinkel hinweg von einer Versorgungsspannung abschaltbar ist, und wobei eine Einrichtung zum Ermitteln der jeweiligen Ist-Drehzahl des Motors - insbesondere unter Anwendung des erfindungsgemäßen Verfahrens - vorgesehen ist.

Wechselstrom-Motoren, wie Kondensatormotoren, werden häufig von einer Phasenanschnittsteuerung angesteuert, wobei durch Änderung des Phasenanschnittwinkels die effektive Motorspannung und dadurch die Drehmoment-Drehzahl-Kennlinie des Motors verändert werden kann. Ist der Motor belastet, so kann dadurch die Drehzahl variiert werden.

Bei vielen Anwendungen ist es erwünscht, die tatsächliche Drehzahl, d. h. die jeweilige Ist-Drehzahl des Motors zu erfassen, und zwar z. B. zum Überwachen des Motors und/oder zum Zwecke einer Drehzahlregelung, wozu einem Regler stets die Ist-Drehzahl rückgeführt werden muß.

Derzeit erfolgt die Drehzahlmessung in den meisten Fällen und vor allem aus Kostengründen unter Verwendung separater Sensoren, beispielsweise durch optische Signalgeber (Encoder), sog. Resolver oder magnetische Sensoren (insbesondere Hall-Sensoren). Insbesondere bei Anwendungen, bei denen die qualitativen Anforderungen an die Drehzahlerfassung (absolute Genauigkeit, Dynamik usw.) nicht sehr groß sind, möglichst geringe Kosten aber eine sehr wichtige Rolle spielen (z.B. bei Lüfteranwendungen), wird die Drehzahl oft mit einem recht preiswerten Hall-Sensor gemessen. Dazu muß im Rotor ein kleiner Magnet angebracht werden, dessen magnetisches Feld bei Rotation vom Sensor erfaßt wird.

Für frequenzumrichtergespeiste, hochdynamische Antriebsanwendungen, insbesondere für Drehstrom-Motoren, wurden auch sensorlose Methoden zur Drehzahlerfassung entwickelt, die allerdings recht aufwendig sind. Diese Methoden beruhen entweder auf einem Flußmodell oder dem "Beobachterprinzip" oder sie nutzten rotorlageabhängige Sättigungseffekte oder künstliche Intelligenz, z.B. sog. neuronale Netze. Diese Methoden müßten aber auf die speziellen Eigenschaften insbesondere von Kondensatormotoren angepaßt werden, könnten aber auch dann für die meisten Anwendungen, wobei eine Phasenanschnittsteuerung für die Drehzahlstellung benutzt wird, aus Kostengründen nicht in Frage kommen.

Das Dokument DE 41 30 532 A1 beschreibt - im Wesentlichen in Übereinstimmung mit den Oberbegriffen der Ansprüche 1 und 9 - ein Verfahren und eine Vorrichtung zur Drehzahl- und/oder Leistungsaufnahme-Regulierung eines Elektromotors. Hierbei ist eine Ansteuerschaltung zum Verändern des Effektivwertes der Wechselspannung vorgesehen, die vorzugsweise durch eine Phasenanschnitt- oder Phasenabschnittsteuerung gebildet ist. Die Ist-Drehzahl des Elektromotors wird hierbei in den Spannungsversorgungslücken über die EMK (elektromotorische Kraft) gemessen.

Das Dokument EP 0 741 450 A1 beschreibt eine weitere sensorlose Motor-Drehzahlsteuerung. Dabei wird zur Feststellung der Drehzahl der Kurvenverlauf des Motorstroms überwacht, und zwar jeweils während einer Halbwelle des Wechselstromes. In einer Ausführung wird die Stromänderung über die Zeit ermittelt, und zwar gegen Ende jeder Strom-Halbwelle kurz bevor ein steuerbarer Schalter (Triac) zu leiten aufhört.

Der vorliegenden Erfindung liegt die Aufgabe zugrunde, eine einfache und kostengünstige Möglichkeit zur sensorlosen Drehzahlermittlung speziell für phasenanschnittgesteuerte Wechselstrom-Motoren, insbesondere Kondensatormotoren, zu schaffen.

Erfindungsgemäß wird dies zunächst durch ein Verfahren nach dem Anspruch 1 erreicht, indem jeweils innerhalb einer Zeitphase, in der der Motor von der Versorgungsspannung getrennt ist, die Steigung eines in dieser Phase quasi-linear verlaufenden Wicklungsstromes gemessen und daraus die Ist-Drehzahl bestimmt wird.

Das erfindungsgemäße Steuersystem nach dem Anspruch 9 ist demnach dadurch gekennzeichnet, dass die Einrichtung zum Ermitteln der Ist-Drehzahl sensorlos aus Mitteln Zur Überwachung eines Wicklungsstromes des Motors und zum Erfassen der Steigung von im jeweils von der Versorgungsspannung abgetrennten Zustand des Motors auftretenden, quasi-linear verlaufenden Abschnitten des Wicklungsstromes sowie aus Mitteln zum Bestimmen der Ist-Drehzahl anhand der jeweils erfaßten Steigung des Wicklungsstromes besteht.

Die Erfindung beruht auf der Erkenntnis, dass die zeitliche Änderung des Wicklungsstromes in den Zeiten, in denen der Motor jeweils über den statischen Schalter der Phasenanschnittsteuerung von der Versorgungsspannung getrennt ist, wegen des induktiven Wicklungsverhaltens mit guter Annäherung linear, d. h. "quasilinear" ist, und dass dabei die Steigung dieses Stromverlaufs in diesen Phasen hauptsächlich drehzahlabhängig ist. Erfindungsgemäß wird dieser Effekt zur Drehzahlerfassung eines solchen Motors benutzt.

Speziell bei einem Kondensatormotor, der eine Arbeitswicklung und eine dazu parallel und in Reihe mit einem Betriebskondensator geschaltete Hilfswicklung aufweist, kann wahlweise der Strom durch die Arbeitswicklung oder auch der Strom durch die Hilfswicklung zur Drehzahlerfassung überwacht und ausgewertet werden. Dies liegt daran, dass in den jeweils durch die Phasenanschnittsteuerung von der Versorgungsspannung getrennten Zeitphasen von der Versorgungsspannungsquelle her kein Speisestrom fließt, so dass die Summe der Wicklungsströme gleich Null ist. Deshalb ändert sich der Strom in der Hilfswicklung genau so quasi-linear wie in der Arbeitswicklung, nur mit entgegengesetzter Steigung. Erfindungsgemäß kann somit der Strom in der Arbeitswicklung oder alternativ in der Hilfswicklung für die Drehzahlerfassung genutzt werden. In den Zeitphasen, in denen der statische Schalter den Motor von der Versorgungsspannung (insbesondere der Netzspannung) trennt, wird die Steigung des Wicklungsstroms gemessen und aus diesem Wert die Motordrehzahl bestimmt.

Bedingung für die erfindungsgemäße Drehzahlerfassung ist somit ein minimaler Anschnittwinkel. Arbeitet der Motor mit maximaler Aussteuerung (Anschnittwinkel = 0°), so könnte die Drehzahl nicht erfaßt werden. Erfindungsgemäß wird dies jedoch ermöglicht, indem der Anschnittwinkel periodisch für eine kurze Zeitdauer (z. B. für eine Netzhalbwelle) auf einen für die Messung ausreichenden Grenzwert erhöht wird. Dieser minimale Anschnittwinkel ist im Wesentlichen durch die Qualität der Auswerteelektronik und durch die erwünschte Meßgenauigkeit bestimmt. Ist die Periode zwischen den auf diese Weise durchgeführten Messungen lang genug, so beeinflußt diese Methode das Motorverhalten nur unwesentlich, ermöglicht aber im ganzen Arbeitsbereich vorteilhafterweise die sensorlose Drehzahlerfassung.

Erfindungsgemäß kann die Ist-Drehzahl aus der ermittelten Steigung des Wicklungsstroms durch bestimmte, motorspezifische Rechenoperationen bestimmt werden. Es ist aber besonders einfach und somit auch steuerungstechnisch günstig, wenn der ermittelten Steigung des Wicklungsstromes anhand einer zuvor empirisch für den jeweiligen Motor ermittelten, also motorspezifischen, in geeigneten Speichermitteln abgelegten Steigungs-/Drehzahl-Tabelle eine jeweils zugehörige Drehzahl als aktuelle Ist-Drehzahl zugeordnet wird.

Weitere vorteilhafte Ausgestaltungsmerkmale und Maßnahmen der Erfindung sind in den jeweils abhängigen Ansprüchen sowie auch in der folgenden Beschreibung enthalten.

Anhand der Zeichnung und darin veranschaulichter, bevorzugter Ausführungsbeispiele soll die Erfindung genauer erläutert werden. Dabei zeigen:

Fig. 1          ein Blockschaltbild einer ersten Ausführungsform eines erfindungsgemäßen Steuersystems,

Fig. 2          verschiedene Spannungs- und Stromdiagramme zur Erläuterung der prinzipiellen Wirkungsweise einer Phasenanschnittssteuerung,

Fig. 3          mehrere Diagramme des Wicklungsstromes - hier speziell des Stromes $i_{AW}$ durch die Arbeitswicklung eines Kondensatormotors - bei unterschiedlichen Drehzahlen $n_n$,

Fig. 4          ein weiteres Diagramm des Wicklungsstromes $i_{AW}$ zur Erläuterung der Bestimmung der Steigung eines quasi-linearen Abschnittes des Stromverlaufs,

Fig. 5a u. b    ein Flußdiagramm zum Ablauf einer bevorzugten Ausführung des erfindungsgemäßen Verfahrens,

Fig. 6          ein Blockschaltbild einer weiteren Ausführungsform des erfindungsgemäßen Steuersystems,

Fig. 7          ein Detail-Schaltbild einer bevorzugten Ausführung eines in der Ausführung nach Fig. 6 vorgesehenen Nullstromdetektors,

Fig. 8          ein weiteres Blockschaltbild in einer Variante zu Fig. 6,

Fig. 9          ein Detail-Schaltbild einer bevorzugten Ausführung eines in der Ausführungsform nach Fig. 8 vorgesehenen Schalterspannungsdetektors,

Fig. 10         ein detaillierteres Schaltbild des Steuersystem in einer ersten möglichen Ausgestaltung und

Fig. 11         ein Schaltbild ähnlich Fig. 10 einer zweiten möglichen Realisierung.

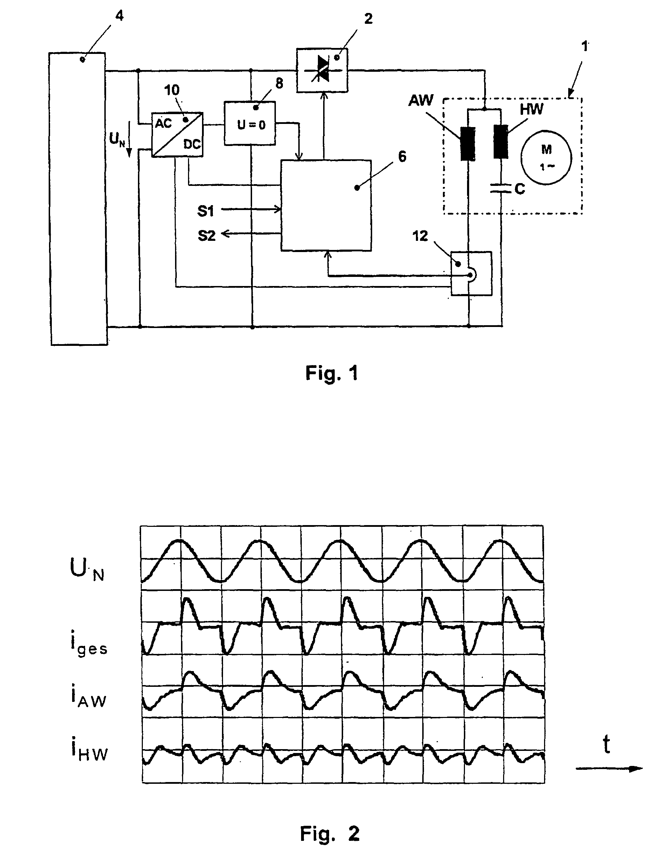

Wie sich zunächst aus Fig. 1 ergibt, wird ein Wechselstrom-Motor 1 über einen statischen Schalter 2 mit einer Wechselspannungsquelle 4, im Allgemeinen dem üblichen Niederspannungsnetz $U_N$, verbunden. Der Motor 1 ist als Kondensatormotor ausgeführt, der eine Arbeitswicklung AW und dazu parallel eine in Reihe mit einem Betriebskondensator C liegende Hilfswicklung HW aufweist. Der statische Schalter, hier beispielhaft und symbolisch als Triac dargestellt, wird von einer Steuereinheit 6 insbesondere zur Änderung der Lastspannung durch Phasenanschnitt gesteuert. Die Steuereinheit 6 erhält dazu von einem Nullspannungsdetektor 8 Informationen über die Zeitpunkte der Spannungsnulldurchgänge der Wechselspannung $U_N$. Der Schalter 2 kann von der Steuereinheit 6 zeitverzögert gegenüber dem Spannungsnulldurchgang gezündet werden, wodurch eine Reduzierung der an die Motorwicklungen AW, HW geschalteten Spannung gegenüber der Versorgungsspannung $U_N$ möglich ist, woraus bei geeigneter Lastkennlinie eine Veränderung der Drehzahl resultiert. Die Zündverzögerungszeit bzw. der Phasenanschnittwinkel wird der Steuereinheit 6 über einen StellEingang S1 von einer übergeordneten (nicht dargestellten) Steuerung oder Regelung zur Drehzahlvariation vorgegeben. Zur internen Spannungsversorgung der Komponenten des Steuersystems ist außerdem ein Netzteil 10 vorgesehen.

Wenn nun der vorzugsweise durch einen Triac gebildete statische Schalter 2 bei jedem Nulldurchgang einen Zündimpuls erhält, ist er ständig eingeschaltet. In diesem Fall ist die Motorspannung gleich der Versorgungsspannung. Erfolgt die Zündung aber erst jeweils nach einer gewissen Verzögerung, wird durch Phasenanschnitt die effektive Motorspannung reduziert. Die Größe dieser Spannungsreduzierung ist von der Zeit abhängig, in der der Motor 1 von der Versorgungsspannung getrennt ist. In dieser Zeit bezieht er keine Energie aus der Spannungsquelle 4, deshalb arbeitet er mit einer abgeschwächten Motorkennlinie. Wenn der Motor 1 von der Spannungsquelle 4 getrennt ist, bedeutet dies jedoch nicht, dass seine Wicklungen AW, HW stromlos sind. Durch die in den Induktivitäten des Motors 1 gespeicherte Energie wird jeweils ein Strom im Stromkreis Arbeitswicklung AW - Hilfswicklung HW - Betriebskondensator C noch eine gewisse Zeit aufrecht erhalten.

In Fig. 2 sind die Versorgungsspannungen $U_N$, der Gesamtstrom $i_{ges}$ in der Motorzuleitung, der Strom $i_{AW}$ durch die Arbeitswicklung sowie der Strom $i_{HW}$ durch die Hilfswicklung veranschaulicht. Bei Phasenanschnitt geht der Gesamtstrom $i_{ges}$ periodisch auf Null zurück, die einzelnen Wicklungen sind aber in diesen Zeiten nicht stromlos. Da ein Kondensatormotor in einem breiten Arbeitsbereich mit einem Leistungsfaktor nahe Eins arbeitet, verläuft der Motorstrom $i_{ges}$ ähnlich, wie es bei einer rein ohmschen Last der Fall wäre. Das bedeutet aber gleichzeitig, dass die Form des Gesamt-Motorstroms $i_{ges}$ von der Drehzahl nicht wesentlich beeinflußt wird. Allerdings wurde erkannt, dass der Stromverlauf in der Arbeitswicklung sowie auch in der Hilfswicklung eine starke Drehzahlabhängigkeit aufweist.

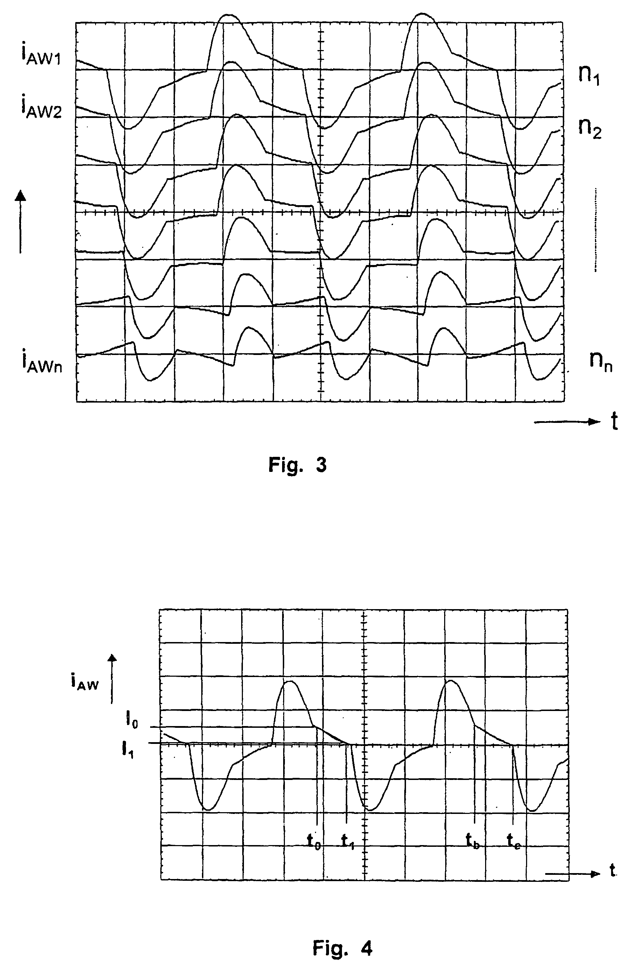

In Fig. 3 ist dieser Effekt beispielhaft für den Stromverlauf $i_{AW}$ in Arbeitswicklung AW des Motors 1 bei unterschiedlichen Drehzahlen $n_1$ bis $n_n$ dargestellt. Bei dem veranschaulichten konkreten Beispiel handelt es sich um einen Kondensatormotor eines Gebläses bei 230V/50Hz Wechselstromnetz und 2 µF Betriebskondensator mit elektrisch 90° Phasenanschnittwinkel bei unterschiedlichen Drosselungen des Gebläses, was zu unterschiedlichen Drehzahlen führt, und zwar von oben nach unten:

  956min$^{-1}$ (freiblasend)
  1300min$^{-1}$
  1600min$^{-1}$
  1900min$^{-1}$
  2200min$^{-1}$
  2500min$^{-1}$ und
  2780min$^{-1}$.

Daraus ist deutlich erkennbar, dass jeder Stromverlauf in den Zeitphasen des Phasenanschnittes quasi-lineare Abschnitte aufweist, deren Steigung sich drehzahlabhängig ändert. Die Steigung kann demnach erfindungsgemäß zur Bestimmung der Drehzahl verwendet werden.

Dazu ist gemäß Fig. 1 erfindungsgemäß eine Stromerfassungseinrichtung 12 vorgesehen, die hier beispielhaft in Reihe zu der Arbeitswicklung AW geschaltet ist und ein dem Wicklungsstromverlauf entsprechendes Signal erzeugt, welches der Steuereinheit 6 zur Auswertung hinsichtlich der Drehzahlbestimmung zugeführt wird. Es sei nochmals erwähnt, dass alternativ natürlich auch die Auswertung des Stromes der Hilfswicklung HW möglich ist.

In der Steuereinheit 6 erfolgt die Auswertung des Wicklungsstromes zum Ermitteln der jeweiligen Ist-Drehzahl des Motors 1, die als ein Drehzahlsignal S2 an eine übergeordnete Überwachungseinrichtung, Steuerung, Regelung oder dergleichen in geeigneter Form, d. h. analog oder digital, übermittelt wird.

Zur Drehzahlerfassung wird die zeitliche Änderung des Wicklungsstromes während der phasenanschnittbedingten Ausschaltphasen bestimmt. Dies kann z. B. ein in der Steuereinheit 6 vorgesehener, kostengünstiger Mikrocontroller übernehmen, der gleichzeitig auch die Phasenanschnittsteuerung zur Drehzahlveränderung des Motors 1 durchführen kann. Prinzipiell kann dies bei Nutzung eines digitalen Rechners durch Bildung des Differenzenquotienten erfolgen. Hierzu wird der Augenblickswert des Wicklungsstroms zu zwei diskreten Zeitpunkten gemessen. Aus der Differenz der Stromwerte und der Zeitdauer zwischen den beiden Messungen kann die zeitliche Stromänderung, d. h. die Steigung der Stromkennlinie, berechnet werden.

In Fig. 4 ist beispielhaft die Messung des Wicklungsstromes $I_0$ zum Zeitpunkt $t_0$ kurz nach dem Sperren des statischen Schalters 2 und die zweite Messung des Stromes $I_1$ zum Zeitpunkt $t_1$ kurz vor dem erneuten Zünden des Schalters 2 dargestellt. Liegen die beiden Meßpunkte möglichst weit auseinander, so erhöht sich die Meßgenauigkeit. Durch Bildung des Differenzenquotienten

$$\Delta I / \Delta t = (I_1 - I_0)/(t_1 - t_0)$$

wird die mittlere Stromsteilheit im Intervall $[t_0, t_1]$ berechnet. Die Zeitpunkte $t_0$ und $t_1$ können zwei beliebige Zeitpunkte zwischen dem Sperren und erneutem Zünden des Schalters 2 sein, natürlich mit der Bedingung $t_1 > t_0$.

Aus der so ermittelten Strom-Steigung kann dann die Drehzahl nach einem motorspezifischen Zusammenhang bestimmt werden. Da aber das erfindungsgemäße System vorzugsweise bei kleinen Motoren zur Anwendung kommt, die sich nur mit großem Aufwand hinreichend durch ein mathematisches Modell beschreiben lassen, ist es vorteilhafter, die Beziehung Strom-Steigung zur Drehzahl für den jeweiligen Motortyp empirisch zu erfassen. Dies bedeutet, dass die für verschiedene MotorDrehzahlen charakteristischen Strom-Steigungen zuvor gemessen und die so ermittelten Beziehungen in Form einer Tabelle im Mikrocontroller abgelegt werden. Damit ist jeder Strom-Steigung eindeutig eine Motor-Drehzahl zugeordnet. Die Bestimmung der Drehzahl kann auf diese Weise mit einem minimalen Aufwand an durchzuführenden arithmetischen Operationen geschehen.

Wird der Zusammenhang zwischen Strom-Steigung und Drehzahl tabellarisch festgelegt, ist es vorteilhafterweise auch nicht erforderlich, die Strom-Steigung - wie oben erläutert - genau zu berechnen. Vielmehr ist es ausreichend, die Stromänderung

$$\Delta I = I_1 - I_0$$

innerhalb eines konstanten Zeitintervalls zu bestimmen. In der abzulegenden Tabelle ist dann der Zusammenhang zwischen Stromänderung im konstanten Zeitintervall und der Drehzahl gespeichert. Ist die Zeitdauer zwischen $t_0$ und $t_1$ bei jeder Messung konstant, so kann sich vorteilhafterweise die numerische Division erübrigen und die Berechnung auch mit einem einfachen Mikrocontroller mit geringsten Resourcen realisiert werden. Dies trägt zur Lösung der Aufgabe bei, nämlich ein kostengünstiges System zur sensorlosen Erfassung der Drehzahl zur Verfügung zu stellen.

Eine weitere Verbesserung hinsichtlich einer größeren Toleranz gegenüber auftretenden Störungen kann dadurch erreicht werden, dass die Messung und/ oder Berechnung der Stromänderung während der Ausschaltphase wiederholt durchgeführt wird und eine Mittelwertbildung erfolgt. Diese Mittelwertbildung kann sowohl auf die Strom-Meßwerte angewandt werden als auch auf die berechnete Strom-Änderung.

Zur Unterdrückung von höherfrequenten Störungen wird bei jeder Strommessung vorzugsweise mehrmals hintereinander abgetastet und eine Mittelwertbildung insbesondere über einen digitalen Tiefpaß, beispielsweise gemäß der Gleichung

$$I'_i = (1-k) I'_{i-1} - kI_i \text{ (mit } k < 1)$$

durchgeführt. I ist hierbei das Eingangssignal und I' das zeitlich gemittelte Ausgangssignal des Filters.

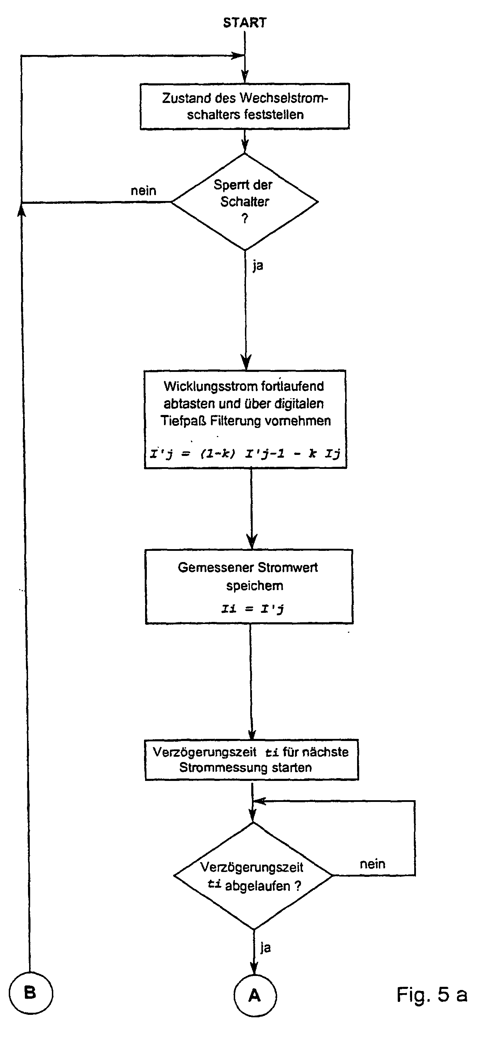

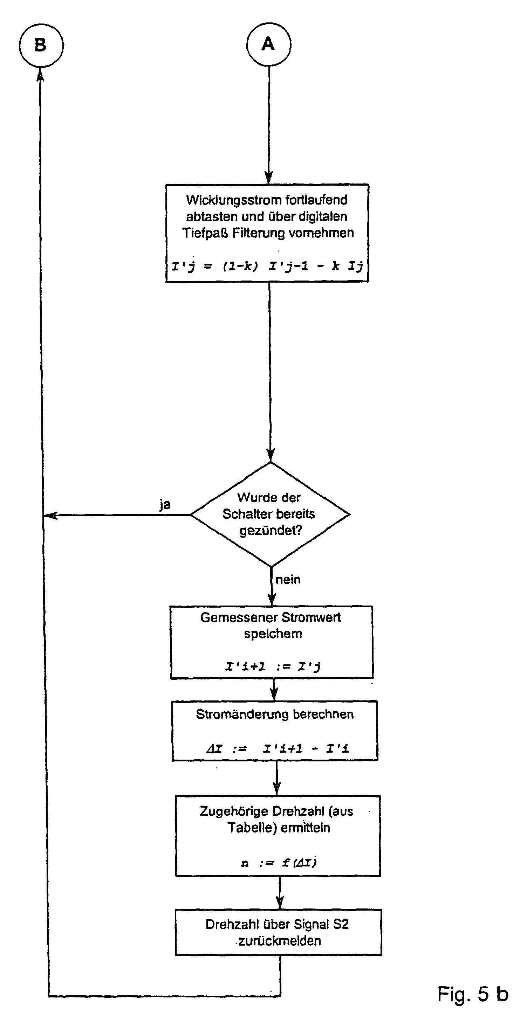

In Fig. 5a und 5b ist der Ablauf des bisher beschriebenen Verfahrens der sensorlosen Drehzahlerfassung zur weiteren Verdeutlichung in Form eines Flußdiagramms dargestellt.

In einer weiteren vorteilhaften Ausgestaltung der Erfindung ist eine Mittelwertbildung der während einer Netzhalbwelle gemessenen Stromänderung $\Delta I_i$ über mehrere Netzperioden vorgesehen. Diese Maßnahme kann vorteilhaft bei einem System mit geringer Dynamik angewendet werden, was bei Antriebslösungen mit Kondensatormotoren in den meisten Fällen auch zutrifft. Hierzu werden über N Netzhalbwellen die Stromänderungen $\Delta I_i$ gemessen und die mittlere Stromänderung $\Delta I^*$ im Meßintervall z. B. gemäß

$$\Delta I^* = \sum \Delta I_i/N \text{ (mit } i = 1, 2...., N)$$

berechnet. Die Anzahl der gemittelten Werte N wird dabei bevorzugt so gewählt, dass sie durch eine Zweierpotenz teilbar ist, um so die erforderliche Division zur Mittelwertbildung durch einfache binäre Schiebeoperationen realisieren zu können.

Wird der Motor 1 mit Vollaussteuerung, d. h. ohne Phasenanschnitt, oder bei sehr kleinen Anschnittwinkeln betrieben, so wäre eine sensorlose Erfassung der Drehzahl nach der Erfindung eigentlich nicht, jedenfalls nicht ohne weiteres möglich, da der statische Schalter 2 ständig leitet bzw. die Zeit zur Messung der Stromänderung zu kurz ist. Diese Problematik wird erfindungsgemäß jedoch dadurch gelöst, dass periodisch angeschnittene Netzhalbwellen jeweils mit einer für die Erfassung der Stromänderung ausreichenden Zündverzögerungszeit eingefügt und eine Messung der Stromänderung zur Drehzahlbestimmung durchgeführt wird. Solange die Zeitdauer zwischen zwei derart "künstlich" eingefügten angeschnittenen Halbwellen groß gegenüber der Netzperiodendauer ist, wird dadurch die effektive Wicklungsspannung, d. h. die Motordrehzahl, nur unwesentlich beeinflußt.

Für die erfindungsgemäße Ermittlung der Stromänderung müssen - vgl. dazu nochmals Fig. 4 - die Zeitpunkte $t_b$ des Beginns und $t_e$ des Endes der Zeitphase bekannt sein, während der der Motor 1 vom Netz getrennt ist, d. h. der statische Schalter 2 sperrt. Der Zeitpunkt $t_e$ entspricht dem Zündzeitpunkt des statischen Schalters 2, der von der Steuereinheit 6 selbst für den Phasenanschnitt generiert wird und ihr daher ohnehin bekannt ist. Zum Zeitpunkt $t_b$ geht der statische Schalter 2 vom leitenden in den sperrenden Zustand über. Dieser Zeitpunkt ändert sich in Abhängigkeit vom Betriebszustand des Motors und muß deshalb jeweils bestimmt werden. Dazu seien im folgenden bevorzugte Methoden erläutert.

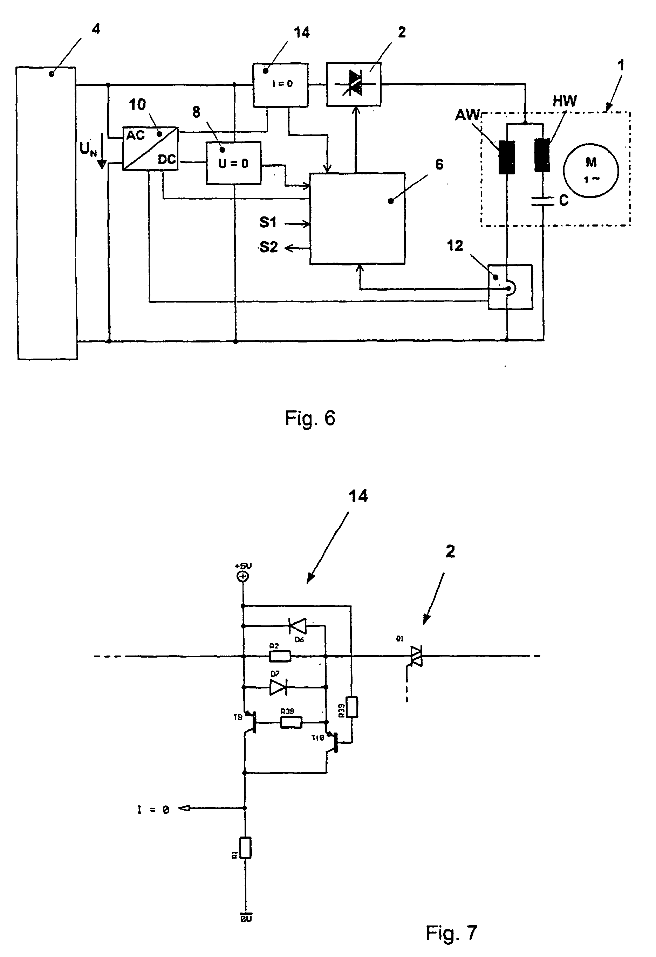

Eine erste Möglichkeit ist in den Fig. 6 und 7 veranschaulicht. Dabei wird der Zeitpunkt $t_b$ des Sperrens, d. h. des Beginns einer Messung der Stromänderung, durch einen in Reihe zu dem statischen Schalter 2 geschalteten Nullstromdetektor 14 festgestellt. Dieser überwacht den Stromfluß und gibt ein Signal an die Steuereinheit 6 weiter, wenn der Strom unter eine vordefinierte Grenze nahe Null gefallen ist.

Eine mögliche schaltungstechnische Realisierung des Nullstromdetektors 14 ist in Fig. 7 dargestellt. Bei dieser Schaltung wird die Flußspannung zwei antiparallel geschalteter Dioden D6, D7 überwacht. Fließt kein Strom durch diese Dioden, so ist die Spannung über den Dioden gleich Null, wodurch zwei Transistoren T9, T10 sperren und der Nullstromdetektor 14 dadurch ein logisches 0-Signal am Ausgang liefert (I=0).

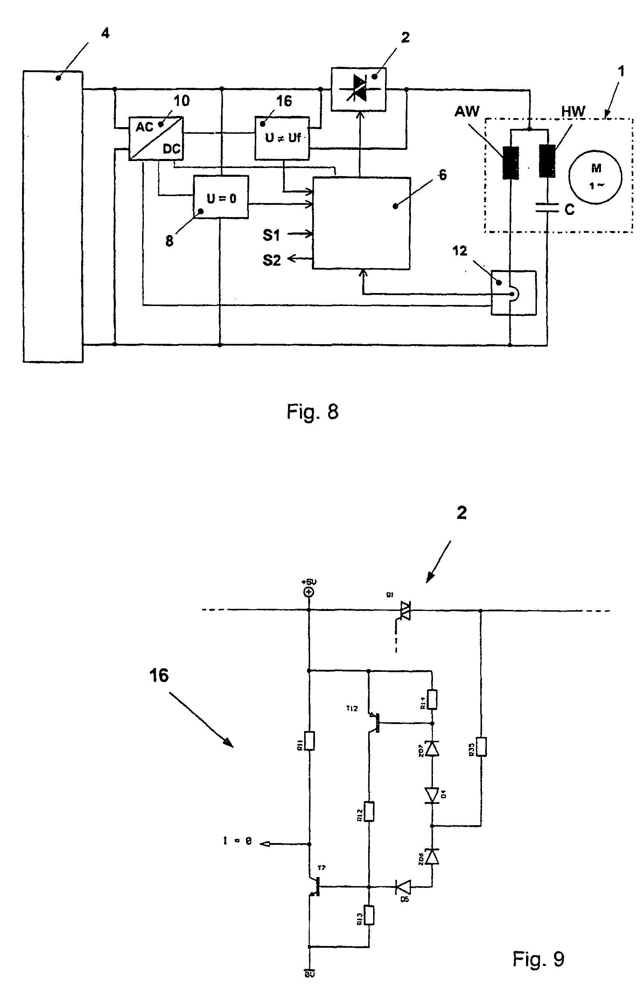

In Fig. 8 ist eine weitere vorteilhafte Alternative zur Bestimmung des Zeitpunktes $t_b$ dargestellt. Hierbei wird die Spannung über dem statischen Schalter 2 mittels eines dazu parallel liegenden Schalterspannungsdetektors 16 und bevorzugt durch einen Fensterkomparator überwacht, der ein logisches 0-Signal am Ausgang liefert, sobald die Spannung über dem Schalter 2 größer als seine im leitenden Zustand betriebsmäßig auftretende Durchlaßspannung ist.

Eine mögliche Schaltungsrealisierung dieses Schalterspannungsdetektors 16 ist in Fig. 9 dargestellt. Ist die Spannung über dem Schalter 2 kleiner als die durch Z-Dioden Z6, Z7 vorgegebene positive und negative Spannungsgrenze, so leitet keiner von zwei Transistoren T7, T12; am Ausgang steht dann ein logisches 1-Signal an. Ist die Schalterspannung dagegen größer als das durch die Z-Dioden festgelegte Fenster, so leitet je nach Spannungspolarität entweder der eine oder der andere der beiden Transistoren T7/T12, wodurch ein logisches 0-Signal am Ausgang des Detektors 16 entsteht. Das Spannungsfenster ist hierbei so festgelegt, dass bei der betriebsmäßig über dem Schalter 2 auftretenden Flußspannung ein 1-Signal am Ausgang entsteht, welches den leitenden Zustand des Schalters 2 signalisiert, und bei gesperrtem Schalter, wobei die Spannung größer ist als die betriebsmäßig auftretende Flußspannung, ein 0-Signal am Ausgang erzeugt wird.

In einer weiteren Variante kann der Zeitpunkt $t_b$ vorteilhafterweise sogar auch ohne zusätzliche Mittel bestimmt werden, d. h. auch mit einer Schaltungsanordnung gemäß Fig. 1. Dazu wird von der Steuereinheit 6 fortlaufend, auch im leitenden Zustand des Schalters 2, die Änderung des Wicklungsstromes mittels der Stromerfassungseinrichtung 12 mit einer konstanten Abtastrate festgestellt. Wie die in Fig. 3 veranschaulichten Wicklungsstromverläufe zeigen, tritt (gemäß Fig. 4) zum Zeitpunkt $t_b$ des Sperrens des Schalters 2 jeweils ein Knick im Stromverlauf auf. Dies äußert sich in einer sprungförmigen Änderung der jeweils berechneten Strom-Steigung. Ändert sich die Steigung innerhalb eines konstanten Meßintervalls zwischen aufeinander folgenden Berechnungen um einen Wert, der größer als ein vordefinierter maximaler Grenzwert σ ist, dann liegt der Zeitpunkt $t_b$ vor.

Im einfachsten Fall kann beispielsweise das Kriterium

$$|\Delta I_{i+1} - \Delta I_i| > \sigma$$

zur Erkennung des Abschaltzeitpunktes $t_b$ des statischen Schalters 2 herangezogen werden.

Die Messung des Wicklungsstromes kann nach einem bekannten Prinzip erfolgen. Dieses kann beispielsweise die Erfassung der Spannung über einem in Reihe zur Arbeits- oder Hilfswicklung des Motors geschalteten Widerstand (Shunt) sein oder die Auswertung der vom Strom hervorgerufenen magnetischen Wirkung in Form der Messung des magnetischen Flusses durch einen Hall-Sensor oder magnetoresistiven Sensor.

Der Schaltungsteil zur Strommessung der Motorwicklung und die Ansteuerschaltung für den statischen Schalter 2 liegen je nach Schaltzustand auf unterschiedlichem elektrischem Potential. Daher kann eine Pegelumsetzung entweder des Strom-Meßsignals oder des Ansteuersignals für den Schalter 2 erforderlich sein. Dies kann auf verschiedene Arten realisiert werden.

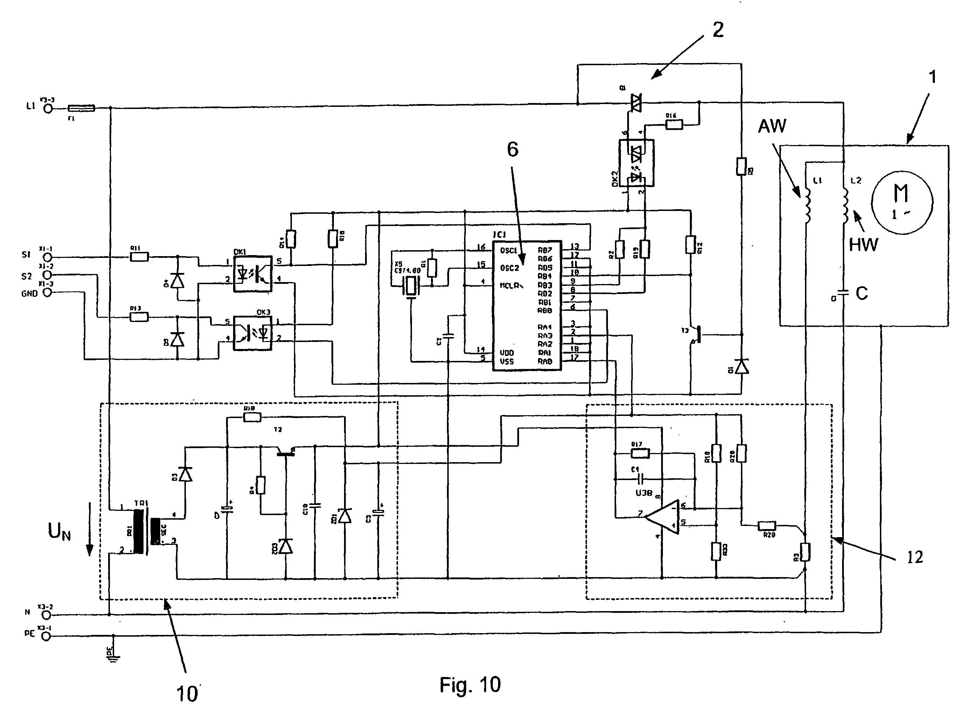

In Fig. 10 ist beispielhaft eine detailliertere Ausführung der elektronischen Schaltung zur sensorlosen Drehzahlerfassung dargestellt, wobei die Strommessung über einen in Reihe zur Motorwicklung liegenden Shunt-Widerstand R3 erfolgt. Die Steuereinheit 6, hier in Form eines Mikrocontrollers IC1, liegt auf dem gleichen elektrischen Potential wie die Strom-Meßschaltung. Die Ansteuerung des Wechselstroms-Schalters 2, im vorliegenden Beispiel durch einen Triac realisiert, erfolgt bevorzugt galvanisch getrennt insbesondere über einen geeigneten Optokoppler OK2. Die Niederspannung wird über einen Transformator TR1 aus der Netzspannung $U_N$ zur Verfügung gestellt. Die Vorgabe des Phasenanschnittwinkels erfolgt hier im Beispiel digital in Form des Aussteuergrades eines externen pulsweitenmodulierten Signals S1, welches vorzugsweise ebenfalls über einen Optokoppler OK1 galvanisch getrennt übertragen wird. Die Rückmeldung der vom Mikrocontroller bzw. von der Steuereinheit 6 sensorlos erfaßten Drehzahl an die nicht dargestellte übergeordnete Einrichtung erfolgt im Beispiel als digitale Information, vorzugsweise in Form der Frequenz eines Rechtecksignals S2 (festgelegte Anzahl von Impulsen pro Umdrehung), und ebenfalls bevorzugt galvanisch getrennt über einen Optokoppler OK3.

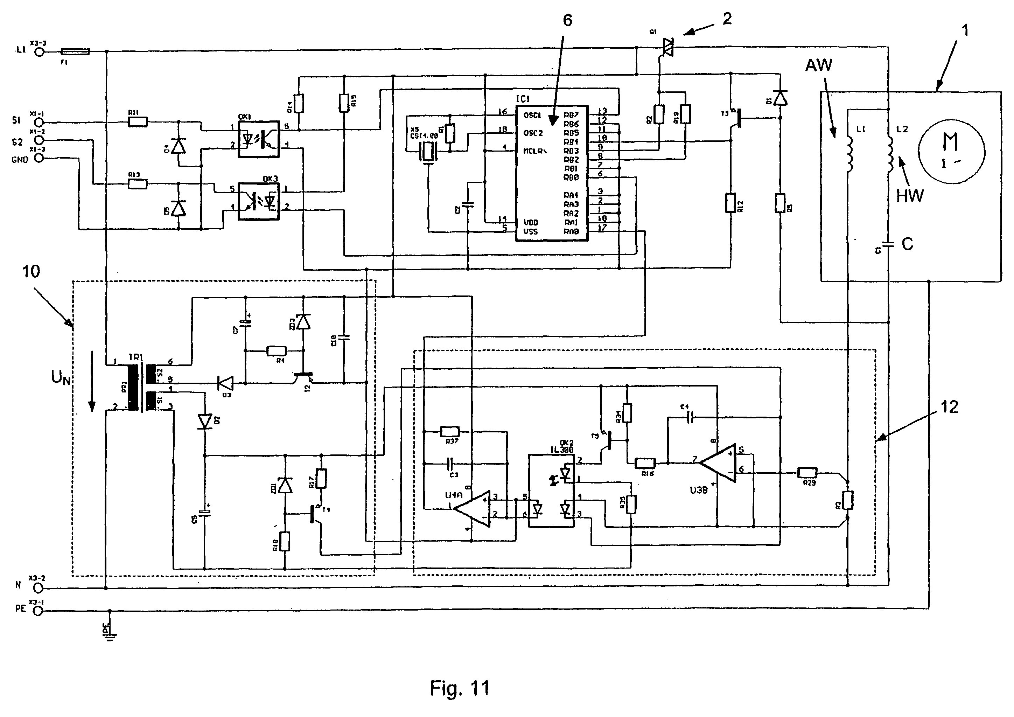

In Fig. 11 ist schließlich eine weitere Ausführungsvariante gezeigt. Hier hat der Mikrocontroller IC1 der Steuereinheit 6 das gleiche elektrische Potential wie der Schalter 2. Die Strommessung erfolgt wiederum über einen Shunt-Widerstand R3 in Reihe zu einer der Motorwicklungen, hier der Arbeitswicklung AW. Das Strommeßsignal wird galvanisch getrennt über einen Linear-Optokoppler OK2 übertragen.

Eine weitere Möglichkeit der galvanisch getrennten Strommessung wäre die Nutzung eines Hall-Sensors oder eines magnetoresistiven Sensors. Diese Sensoren erfassen das vom Wicklungsstrom um eine Leiterbahn oder in einer speziellen Meßspule erzeugte magnetische Feld und liefern ein zur Flußdichte weitestgehend proportionales Ausgangssignal. Diese Variante ist in den Zeichnungen nicht veranschaulicht.

**Patentansprüche**

1. Verfahren zum Ermitteln der Ist-Drehzahl eines phasenanschnittgesteuerten Wechselstrom-Motors (1), insbesondere Kondensatormotors, wobei der Motor zur Änderung seiner Drehzahl jeweils periodisch über einen bestimmten Phasenanschnittwinkel hinweg von einer Versorgungsspannung ($U_N$) abschaltbar ist, **dadurch gekennzeichnet, dass** jeweils innerhalb einer Zeitphase, in der der Motor (1) von der Versorgungsspannung ($U_N$) getrennt ist, die Steigung eines in dieser Phase quasi-linear verlaufenden Wicklungsstromes ($i_{AW}$ oder $i_{HW}$) gemessen und daraus die Ist-Drehzahl bestimmt wird.

2. Verfahren nach Anspruch 1, **dadurch gekennzeichnet, dass** im Falle einer maximalen Drehzahl-Aussteuerung des Motors, wobei der Drehzahl-Phasenanschnittwinkel im Wesentlichen Null ist, für die Bestimmung der Ist-Drehzahl jeweils periodisch eine Meßphase eingefügt wird, in der der Motor mit einem bestimmten, minimalen Mess-Anschnittwinkel vom Netz getrennt wird.

3. Verfahren nach Anspruch 1 oder 2, **dadurch gekennzeichnet, dass** das Messen der Steigung des Wicklungsstromes durch Bildung des Differenzenquotienten erfolgt, indem in mindestens zwei diskreten Zeitpunkten die Augenblickswerte des Wicklungsstromes gemessen werden und aus der Differenz dieser Augenblickswerte und der Zeitdauer zwischen den Messungen die Steigung des Wicklungsstrom-Verlaufes bestimmt wird.

4. Verfahren nach Anspruch 1 oder 2, **dadurch gekennzeichnet, dass** die Steigung des Wicklungsstromes als Stromänderung ($\Delta I = I_1 - I_0$) innerhalb eines jeweils konstanten Zeitintervalls ermittelt wird.

5. Verfahren nach einem der Ansprüche 1 bis 4, **dadurch** gekennzeichne t, dass aus der ermittelten Steigung des Wicklungsstromes nach einem motorspezifischen Zusammenhang die jeweilige Ist-Drehzahl bestimmt wird.

6. Verfahren nach einem der Ansprüche 1 bis 5, **dadurch gekennzeichnet, dass** der ermittelten Steigung des Wicklungsstromes anhand einer zuvor empirisch ermittelten, motorspezifischen Steigungs-/Drehzahl-Tabelle eine jeweils zugehörige Drehzahl als aktuelle Ist-Drehzahl zugeordnet wird.

7. Verfahren nach einem der Ansprüche 1 bis 6, **da-**
**durch gekennzeichnet, dass** während der Zeit- bzw. Meßphase, in der der Motor von der Versorgungsspannung getrennt ist, die Bestimmung der Ist-Drehzahl wiederholt mit anschließender Mittelwertbildung durchgeführt wird.

8. Verfahren nach einem der Ansprüche 1 bis 7, **dadurch gekennzeichnet, dass** mehrmals über mehrere Halbwellen der Versorgungsspannung und die jeweiligen Zeit- bzw. Meßphasen hinweg die Steigung des Wicklungsstromes bzw. die Ist-Drehzahl bestimmt wird, wobei aus den ermittelten Werten ein Mittelwert berechnet wird.

9. Steuersystem für einen Wechselstrom-Motor (1), insbesondere ein Kondensatormotor mit einer Arbeitswicklung (AW) und einer in Reihe mit einem Betriebskondensator (C) liegenden Hilfswicklung (HW), wobei über mindestens einen von einer Steuereinheit (6) steuerbaren statischen Schalter (2) der Motor (1) zur Änderung seiner Drehzahl periodisch über einen bestimmten Phasenanschnittwinkel hinweg von einer Versorgungsspannung($U_N$) abschaltbar ist, und wobei eine Einrichtung zum Ermitteln der jeweiligen Ist-Drehzahl des Motors (1) insbesondere unter Anwendung des Verfahrens nach einem der Ansprüche 1 bis 8 vorgesehen ist, **dadurch gekennzeichnet, dass** die Einrichtung zum Ermitteln der Ist-Drehzahl aus Mitteln zur Überwachung eines Wicklungsstromes ($i_{AW}$ oder $i_{HW}$) des Motors (1) und zum Erfassen der Steigung von im jeweils von der Versorgungsspannung ($U_N$) abgetrennten Zustand des Motors (1) auftretenden, quasi-linear verlaufenden Abschnitten des Wicklungsstromes ($i_{AW}$ oder $i_{HW}$) sowie aus Mitteln zum Bestimmen der Ist-Drehzahl anhand der jeweils erfaßten Steigung des Wicklungsstromes besteht.

10. Steuersystem nach Anspruch 9, **dadurch gekennzeichnet, dass** als Mittel zur Überwachung des Wicklungsstromes eine in Reihe zu einer Motorwicklung (AW oder HW) geschaltete Stromerfassungseinrichtung (12) vorgesehen ist, die ein dem zeitlichen Verlauf des Wicklungsstromes entsprechendes Signal erzeugt, welches zur Auswertung der Steuereinheit (6) zugeführt wird.

11. Steuersystem nach Anspruch 9 oder 10, **gekennzeichnet durch** Mittel zum Feststellen des Zeitpunktes ($t_b$) des Beginns und eventuell des Zeitpunktes ($t_e$) des Endes der Zeitphasen, in denen der Motor (1) über den statischen Schalter (2) von der Versorgungsspannung ($U_N$) getrennt ist.

12. Steuersystem nach Anspruch 11, **gekennzeichnet durch** einen in Reihe zu dem statischen Schalter (2) geschalteten Nullstromdetektor (14).

**13.** Steuersystem nach Anspruch 11, **gekennzeichnet durch** einen parallel zu dem statischen Schalter (2) liegenden Schalterspannungsdetektor (16).

**14.** Steuersystem nach einem der Ansprüche 9 bis 13, gekennzeichnet t durch einen die Versorgungsspannung ($U_N$) zur Feststell ung ihrer Nulldurchgänge überwachenden Spannungsdetektor (8).

**15.** Steuersystem nach einem der Ansprüche 9 bis 14, **dadurch gekennzeichnet, dass** die Steuereinheit (6) Speichermittel zum Ablegen einer insbesondere empirisch ermittelten, motorspezifischen Steigungs-/Drehzahl-Tabelle aufweist.

**16.** Steuersystem nach einem der Ansprüche 9 bis 15, **dadurch gekennzeichnet, dass** die Steuereinheit (6) eine Auswerteeinheit zum Bestimmen der Ist-Drehzahl als einen für die jeweils erfaßte Strom-Steigung gespeicherten Drehzahl-Wert aufweist.

**Claims**

**1.** Method for determining the actual speed of an AC motor (1), which is controlled by phase gating, in particular a capacitor motor, it being possible for the motor to be disconnected from a supply voltage ($U_N$) in each case periodically beyond a specific phase-gating angle for the purpose of changing its speed, **characterized in that**, in each case within a time phase in which the motor (1) is disconnected from the supply voltage ($U_N$), the gradient of a winding current ($i_{AW}$ or $i_{HW}$), which is virtually linear in this phase, is measured, and from this the actual speed is ascertained.

**2.** Method according to Claim 1, **characterized in that**, when the motor is driven at maximum speed, the speed phase-gating angle being essentially zero, a measurement phase, in which the motor is disconnected from the power supply system at a specific, minimum measurement gating angle, is introduced in each case periodically for the purpose of ascertaining the actual speed.

**3.** Method according to Claim 1 or 2, **characterized in that** the gradient of the winding current is measured by forming the difference quotient by the instantaneous values for the winding current being measured at at least two discrete points in time, and the gradient of the winding current waveform being ascertained from the difference between these instantaneous values and the period of time between the measurements.

**4.** Method according to Claim 1 or 2, **characterized in that** the gradient of the winding current is determined as the change in current ($\Delta I = I_1 - I_0$) within an in each case constant time interval.

**5.** Method according to one of Claims 1 to 4, **characterized in that** the respective actual speed is ascertained from the determined gradient of the winding current based on a motor-specific relationship.

**6.** Method according to one of Claims 1 to 5, **characterized in that** the determined gradient of the winding current is assigned a respectively associated speed as the present actual speed using a motor-specific gradient/speed table which has previously been determined empirically.

**7.** Method according to one of Claims 1 to 6, **characterized in that**, during the time or measurement phase in which the motor is disconnected from the supply voltage, the actual speed is ascertained repeatedly, with subsequent averaging.

**8.** Method according to one of Claims 1 to 7, **characterized in that** the gradient of the winding current or the actual speed is ascertained several times over two or more half-cycles of the supply voltage and the respective time or measurement phases, a mean value being calculated from the determined values.

**9.** Control system for an AC motor (1), in particular a capacitor motor having a main winding (AW) and an auxiliary winding (HW) which is connected in series with an operating capacitor (C), it being possible for the motor (1) to be disconnected from a supply voltage ($U_N$) via at least one solid-state switch (2), which can be controlled by a control unit (6), periodically beyond a specific phase-gating angle for the purpose of changing its speed, and a device being provided for determining the respective actual speed of the motor (1) in particular using the method according to one of Claims 1 to 8, **characterized in that** the device for determining the actual speed comprises means for monitoring a winding current ($i_{AW}$ or $i_{HW}$) of the motor (1) and for detecting the gradient of sections of the winding current ($i_{AW}$ or $i_{HW}$) which occur when the motor (1) is in each case disconnected from the supply voltage ($U_N$), and which are almost linear, as well as comprising means for ascertaining the actual speed using the respectively detected gradient of the winding current.

**10.** Control system according to Claim 9, **characterized in that** a current detection device (12) is provided as the means for monitoring the winding current, is connected in series with a motor winding (AW or HW) and produces a signal corresponding to the waveform of the winding current, said signal being fed to the control unit (6) for evaluation purposes.

**11.** Control system according to Claim 9 or 10, **characterized by** means for defining the point in time ($t_b$) of the start and possibly the point in time ($t_e$) of the end of the time phases in which the motor (1) is disconnected from the supply voltage ($U_N$) via the solid-state switch (2).

**12.** Control system according to Claim 11, **characterized by** a zero current detector (14) which is connected in series with the solid-state switch (2).

**13.** Control system according to Claim 11, **characterized by** a switch voltage detector (16) which is connected in parallel with the solid-state switch (2).

**14.** Control system according to one of Claims 9 to 13, **characterized by** a voltage detector (8) which monitors the supply voltage ($U_N$) for the purpose of establishing its zero crossings.

**15.** Control system according to one of Claims 9 to 14, **characterized in that** the control unit (6) has memory means for storing a motor-specific gradient/speed table which is in particular determined empirically.

**16.** Control system according to one of Claims 9 to 15, **characterized in that** the control unit (6) has an evaluation unit for determining the actual speed as a speed value stored for the respectively detected current gradient.

**Revendications**

**1.** Procédé de détermination de la vitesse de rotation réelle d'un moteur à courant alternatif (1) contrôlé par découpage de phase, notamment d'un moteur à condensateur, dans lequel, pour faire varier sa vitesse de rotation, le moteur peut être périodiquement déconnecté d'une tension d'alimentation ($U_N$) sur un angle de découpe de phase, **caractérisé en ce que**, pendant la durée d'une phase temporelle dans laquelle le moteur (1) est séparé de la tension d'alimentation ($U_N$), la pente d'un courant d'enroulement ($i_{AW}$ ou $i_{HW}$) qui a une courbe quasi linéaire dans cette phase est mesurée et la vitesse de rotation est déterminée sur cette base.

**2.** Procédé selon la revendication 1, **caractérisé en ce que**, dans le cas d'une commande maximale de la vitesse de rotation du moteur, dans lequel l'angle de découpe de phase est sensiblement nul, pour la détermination de la vitesse de rotation réelle, une phase de mesure est intercalée périodiquement, phase dans laquelle le moteur est séparé du réseau avec un angle de découpe de mesure minimal déterminé.

**3.** Procédé selon la revendication 1 ou 2, **caractérisé en ce que** la mesure de la pente du courant d'enroulement s'effectue par la formation du quotient différentiel dans laquelle les valeurs instantanées du courant d'enroulement sont mesurées à au moins deux instants discrets et la pente de la courbe du courant d'enroulement est déterminée sur la base de la différence entre ces valeurs instantanées et de la durée de la période séparant les mesures.

**4.** Procédé selon la revendication 1 ou 2, **caractérisé en ce que** la pente du courant d'enroulement est obtenue sous la forme d'une variation du courant ($\square = I_1 - I_0$) dans un intervalle de temps constant.

**5.** Procédé selon une des revendications 1 à 4, **caractérisé en ce que** la vitesse de rotation réelle est déterminée à partir de la pente du courant d'enroulement qui a été obtenue, en se fondant sur une caractéristique particulière au moteur.

**6.** Procédé selon une des revendications 1 à 5, **caractérisé en ce qu'**à la pente du courant d'enroulement qui a été obtenue, est attribuée, en tant que vitesse de rotation réelle actuelle, sur la base d'une table pente/vitesse de rotation particulière au moteur qui a été obtenue empiriquement au préalable, une vitesse de rotation qui y correspond respectivement.

**7.** Procédé selon une des revendications 1 à 6, **caractérisé en ce que**, pendant la phase temporelle ou de mesure dans laquelle le moteur est séparé de la tension d'alimentation, la détermination de la vitesse de rotation est exécutée répétitivement avec formation consécutive d'une moyenne.

**8.** Procédé selon une des revendications 1 à 7, **caractérisé en ce que** la pente du courant d'enroulement, et la vitesse de rotation réelle, sont déterminées à plusieurs reprises sur plusieurs demi-ondes de la tension d'alimentation et sur les phases temporelles et de mesure correspondantes, et une moyenne est alors calculée à partir des valeurs obtenues.

**9.** Système de commande pour un moteur à courant alternatif (1), en particulier pour un moteur à condensateur comprenant un enroulement de travail (AW) et un enroulement auxiliaire (HW) qui est en série avec un condensateur de démarrage (C), dans lequel, au moyen d'un commutateur statique (2) pouvant être commandé par une unité de commande (6), le moteur peut être déconnecté périodiquement d'une tension d'alimentation (UN) sur un angle de découpe de phase déterminé pour faire varier sa vitesse de rotation, et dans lequel il est prévu un dispositif pour obtenir la vitesse de rotation réelle du moteur (1) au moment considéré, en particulier avec application du procédé selon une des revendications 1 à 8, **caractérisé en ce que** le dispositif pour l'obtention de la vitesse de rotation réelle est équipé de moyens pour la surveillance d'un courant d'enroulement ($i_{AW}$ ou $i_{HW}$) du moteur (1) et pour la détection de la pente de segments du courant d'enroulement ($i_{AW}$ ou $i_{HW}$) à courbe quasi linéaire qui existent dans l'état du moteur (1) séparé de la tension d'alimentation ($U_N$) ainsi que de moyens destinés pour la détermination de la vitesse de rotation sur la base de la pente du courant de roulement détectée.

10. Système de commande selon la revendication 9, **caractérisé en ce que**, comme moyens pour la surveillance du courant d'enroulement, il est prévu un dispositif de détection du courant (12) connecté en série avec un enroulement du moteur (AW ou HW) et qui produit un signal correspondant à la courbe de variation du courant d'enroulement dans le temps et qui est envoyé pour analyse à l'unité de commande (6).

11. Système de commande selon la revendication 9 ou 10, **caractérisé en ce que** par des moyens pour fixer l'instant ($t_b$) du début et éventuellement l'instant ($t_e$) de la fin des phases temporelles pendant lesquelles le moteur (1) est séparé de la tension d'alimentation (UN) au moyen du commutateur statique (2).

12. Système de commande selon la revendication 11, **caractérisé par** un détecteur de courant nul (14) connecté en série avec le commutateur statique (2).

13. Système de commande selon la revendication 11, **caractérisé par** un détecteur de tension du commutateur 16, qui est connecté en parallèle avec le commutateur statique (2).

14. Système de commande selon une des revendications 9 à 13, **caractérisé par** un détecteur de tension (8) qui surveille la tension d'alimentation ($U_N$) pour détecter ses passages par zéro.

15. Système de commande selon une des revendications 9 à 14, **caractérisé en ce que** l'unité de commande (6) présente des moyens de mémoire pour enregistrer une table pente/vitesse de rotation particulière au moteur, qui a été obtenue en particulier empiriquement.

16. Système de commande selon une des revendications 9 à 15, **caractérisé en ce que** l'unité de commande (6) présente une unité d'analyse destinée à déterminer la vitesse de rotation réelle sous la forme d'une valeur de vitesse de rotation mémorisée pour la pente de courant détectée.

**Fig. 1**

**Fig. 2**

Fig. 3

Fig. 4

EP 1 191 676 B1

START

Zustand des Wechselstrom-
schalters feststellen

Sperrt der
Schalter
?

nein

ja

Wicklungsstrom fortlaufend
abtasten und über digitalen
Tiefpaß Filterung vornehmen

$I'j = (1-k) \; I'j-1 - k \; Ij$

Gemessener Stromwert
speichern

$Ii = I'j$

Verzögerungszeit $ti$ für nächste
Strommessung starten

Verzögerungszeit
$ti$ abgelaufen ?

nein

ja

B

A

Fig. 5 a

13

B           A

Wicklungsstrom fortlaufend
abtasten und über digitalen
Tiefpaß Filterung vornehmen

$$I'j = (1-k)\ I'j\text{-}1 - k\ Ij$$

Wurde der
Schalter bereits
gezündet?

ja                nein

Gemessener Stromwert
speichern

$$I'i\text{+}1 := I'j$$

Stromänderung berechnen

$$\Delta I := I'i\text{+}1 - I'i$$

Zugehörige Drehzahl (aus
Tabelle) ermitteln

$$n := f(\Delta I)$$

Drehzahl über Signal S2
zurückmelden

Fig. 5 b

Fig. 6

Fig. 7

Fig. 8

Fig. 9

Fig. 10

EP 1 191 676 B1

Fig. 11

EP 1 191 676 B1